# EUROPÄISCHE PATENTSCHRIFT

(11) **EP 0 315 130 B1**
(45) Veröffentlichungstag und Bekanntmachung des Hinweises auf die Patenterteilung: **30.06.1993**
(21) Anmeldenummer: 88118209.1
(22) Anmeldetag: 02.11.1988
(51) Int. Cl.: G11B 27/30, G11B 20/12, G11B 20/14, H04L 7/08

(54) **Verfahren zur Übertragung eines Digitalsignals**
Method for transmitting a digital signal
Méthode de transmission d'un signal numérique

(30) Priorität: 04.11.1987 DE 3737306
(43) Veröffentlichungstag der Anmeldung: 10.05.1989
(73) Patentinhaber: Deutsche Thomson-Brandt GmbH, 78003 Villingen-Schwenningen (DE)
(72) Erfinder: Scholz, Werner, Dipl.-Ing., D-3007 Gehrden (DE)

(56) Entgegenhaltungen:
- EP-A- 0 146 636
- US-A- 3 705 398
- US-A- 4 389 636
- PATENT ABSTRACTS OF JAPAN, Bd. 3, Nr. 36 (E-100) 27.März 1979;& JP-A-5413719

## Beschreibung

Es ist bekannt, bei der Übertragung, insbesondere der Aufzeichnung, eines Digitalsignals, den Beginn eines Datenblocks durch ein Synchronsignal zu kennzeichnen. Außerdem ist oft die Übertragung einer Zusatzinformation erforderlich, die nicht zu dem eigentlichen Datenstrom gehört. Ein derartiges Übertragungssystem ist bekannt durch die EP-A-0 146 636.

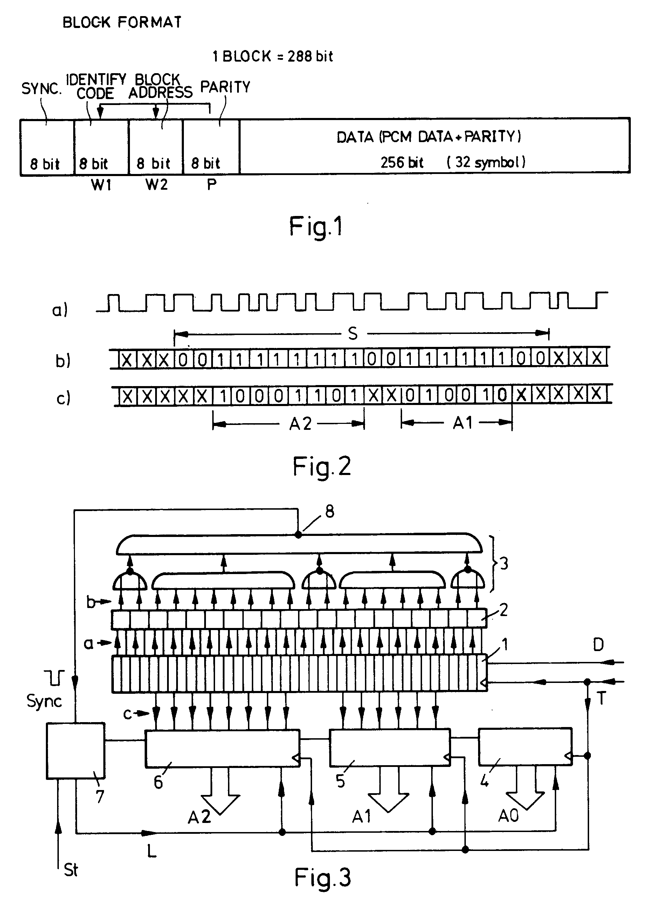

Fig. 1 zeigt ein Beispiel für das R-DAT (Rotational Digital Audio Tape)-Blockformat. Hier ist die Zeit von 8 Datenbits für das Synchronwort reserviert. Darauf folgen zweimal 8 Bit für die Zusatzinformation und 8 Bit Paritäts-Signal für die Fehlererkennung in der Zusatzinformation. Der Rest des Blocks wird durch den eigentlichen Datenstrom von 32 x 8 Bits gebildet. Die Übertragung erfolgt mit 8/10 Modulation, d.h. aus jedem 8-Bit-Wort wird ein 10-Bit-Wort gebildet. Dadurch wird das Übertragungssignal gleichspannungsfrei und in der Runlength begrenzt. Die Codierungstabellen sind so zusammengestellt, daß das 10-Bit-Synchronmuster im übrigen Bitstrom nicht vorkommt.

Diese Art der Übertragung von Synchron- und Zusatzinformation hat folgende Nachteile:
1. Die Reservierung eines exklusiven 10-Bit-Musters für das Synchronsignal schränkt die Auswahlmöglichkeiten bei der Aufstellung der Codierungstabelle ein.
2. Das kurze Synchronmuster kann beim Auftreten von Bitfehlern leicht vorgetäuscht werden.
3. Bevor die Zusatzinformation ausgewertet werden kann, muß mit Hilfe des Synchronwortes die Blocksynchronisation hergestellt sein. Erst dann kann die Zusatzinformation demoduliert und mit Hilfe des Parity-Wortes überprüft werden.

Zur Vermeidung der unter 1. und 2. genannten Nachteile wurde für die Signalaufzeichnung in unterteilten Spuren bereits folgendes Verfahren vorgeschlagen:
a) Das am Anfang der Spur befindliche Einlaufsignal enthält eine Information, die es ermöglicht, die Blocksynchronisation bereits während des Einlaufsignals mit hoher Sicherheit herzustellen (DE-OS 35 33 962).
b) Die Synchronisierworte im eigentlichen Signal sind so ausgewählt, daß die Vortäuschung eines um ein oder wenige Bits verschobenen Synchronwortes möglichst unwahrscheinlich ist (P 36 39 886).

Da nach Herstellung der Blocksynchronisation mit Hilfe des Einlaufsignals Synchronisationsfehler nur noch durch Bitslips entstehen, d.h. durch Verschieben der Zählphase für die Blocksynchronisierung um ein oder wenige Bits, genügt es, die Zählphase mit Hilfe der übertragenen Synchronworte innerhalb eines begrenzten Zeitfensters zu überwachen. Daher ist es auch nicht erforderlich, bestimmte Bitmuster exklusiv für die Synchronworte zu reservieren. Um extreme Bit-Slips korrigieren zu können, muß das Zeitfenster möglichst groß sein. Damit die Vortäuschung eines innerhalb dieses Zeitfensters verschobenen Synchronwortes im hohen Maße unwahrscheinlich wird, muß das Synchronwort entsprechend lang sein.

Der Erfindung liegt die Aufgabe zugrunde, bei einem möglichst geringen Aufwand an Übertragungskapazität die Auswertbarkeit der Synchroninformation und der Zusatzinformation möglichst einfach und sicher zu gestalten.

Diese Aufgabe wird durch die im Anspruch 1 beschriebene Erfindung gelöst. Vorteilhafte Weiterbildungen der Erfindung sind in den Unteransprüchen beschrieben.

Es ist auch ein Modulationsverfahren bekannt (US-A-4 389 636), bei dem komplementäre Bitpaare vorgesehen sind, die entweder eine O oder eine L darstellen (zwei Demodulation).

Die Erfindung beruht auf der Erkenntnis, daß ein verhältnismäßig langes und daher nur mit geringer Wahrscheinlichkeit vortäuschbares Synchronwort durch doppelte Modulation neben der Synchroninformation zusätzlich eine Zusatzinformation übertragen kann.

Bei einer matrixartigen Aufzeichnung in Blöcken mit parallel zur Bandkante verlaufenden Spuren gemäß der DE-OS 35 09 584 kann die Zusatzinformation z.B. in der Nummer eines Datenblockes innerhalb einer Spur und der Spurnummer innerhalb eines Spurenblockes bestehen.

Die Erfindung wird in folgenden anhand der Zeichnung in Zusammenhang mit den Figuren 2 und 3 erläutert. Dabei zeigen
- Fig. 2: das Bitmuster für die Synchroninformation und die Zusatzinformation und
- Fig. 3: ein Schaltbild für die Auswertung.

Fig. 2a zeigt die gleichzeitige Übertragung von Synchron- und Zusatzinformationen innerhalb eines 40 Bit langen Signalabschnitts S. Die Länge des Signalabschnitts S entspricht dem in Fig. 1 gezeigten Beispiel. Die 4 x 8 Bit Synchron- und Zusatzinformation ergeben nach 8/10 Modulation 40 Bit für die Übertragung. In Fig. 2b ist das durch Demodulation des Synchronwortes gewonnene Synchronmuster S dargestellt. Dieses Bitmuster erhält man durch Demodulation des Signals gemäß Fig. 2a mit einem Biphase-Mark-Demodulator. Bei Biphase wird jedes Datenbit durch zwei Übertragungsbits dargestellt. Bei Biphase-Mark wird die "1" durch zwei ungleiche Bits und die "0" durch zwei gleiche Bits gebildet. In Fig. 2c ist die aus dem Signal in Fig. 2a gewonnene Zusatzinformation dargestellt. Die Zusatzinformation A1, A2 erhält man durch Demodulation des Signals gemäß Fig. 2a mit einem Biphase-Level-Demodulator. Bei Biphase-Level bestehen die Bitpaare stets aus ungleichen Bits. Die Information liegt dabei in der Reihenholge von "0" und "1" innerhalb eines Bitpaares.

Das übertragene Signal im Bereich S gemäß Fig. 2a ist dc-frei, wenn die "0" im Synchronmuster S (Fig. 2b) stets paarweise auftritt. Die maximale Runlength beträgt 3. Daher sind die in Fig. 2a dargestellten Bitmuster für die Synchron- und Zusatzinformation für die Anwendung innerhalb gleichspannungsfreier und Runlength-begrenzter Übertragungscodes geeignet. Die Anwendung kann auch innerhalb von Bitströmen erfolgen, die nicht diesen Beschränkungen unterliegen.

In dem in Fig. 2 dargestellten Beispiel entspricht jeder "1" im Synchronmuster S (Fig. 2b) ein Informationsbit der Zusatzsignale (Fig. 2c). Es werden hier zwei Zusatzsignale A1 und A2 übertragen. Die beiden Signale sind durch 2 Bitpaare voneinander getrennt, die nicht dem Biphase-Level-Signal entsprechen. Durch ungleiche Wortlänge für A1 und A2 wird die Vortäuschung eines verschobenen Synchronmusters durch gestörte Bits erschwert. Die Länge des Synchronmusters ist zweckmäßigerweise ein ganzzahliges Vielfaches der Wortlänge des übrigen Signals.

Fig. 3 zeigt ein Beispiel für eine Auswertungschaltung für das Synchronsignal gemäß Fig. 2. An den Ausgängen des Schieberegisters 1 ist stets ein 40 Bit langer Abschnitt des Signals gemäß Fig. 2a verfügbar. Diese 40 Bits werden paarweise den Eingängen von 20 EXOR-Gattern 2 zugeführt. Die Gatteranordnung 3 erzeugt beim Auftreten des Bitmusters S an den 20 Ausgängen der EXOR-Gatter 2 einen negativen Synchronimpuls an ihren Ausgang 8.

Während des Auftretens des Bitmusters S liegen an den Ausgängen c des Schieberegisters 1 die Datenwörter A1 und A2 der Zusatzinformation. Ob diese Datenwörter auf die Zählschaltungen 5,6 übertragen werden, entscheidet eine Steuerschaltung 7. Diese Steuerung ist so einzurichten, daß ein möglichst störungsfreier Betrieb gewährleistet ist. Wenn z.B. zu Beginn einer Spur eine einwandfreie Blocksynchronisation mit Hilfe des Einlaufsignals erfolgte, dann erfolgt während der Spur ein erneutes Setzen der Zähler 4,5,6 nur dann, wenn ein verschobenes Synchronsignal innerhalb eines Zeitfensters, in dem die Vortäuschung eines Synchronsignals höchst unwahrscheinlich ist, festgestellt wird. Sofern die Blocksynchronisation mit Hilfe des Einlaufsignals nicht erfolgen konnte, wird das Zeitfenster ausgeschaltet. Sobald festgestellt wird, daß die Synchronmuster im vorschriftsmäßigen Abstand auftreten, ist mit hoher Sicherheit der korrekte Betriebszustand erreicht. Das Zeitfenster kann wieder eingeschaltet werden.

Das Signal gemäß Fig. 2 kann als Synchron- und Zusatzinformation für die genannte matrixartige Aufzeichnung in Blöcken dienen. In der Schaltung gemäß Fig. 3 zählt dann der Zähler 4 die Bits je Datenblock. Der Zähler 5 zählt die Datenblöcke je Spur, und der Zähler 6 zählt die Spuren oder Spurpaare je Spurenblock. Die Zähler 4,5,6 müssen bei Beginn einer Abspielung, eines Spurenblocks bzw. einer Spur eingestellt werden. Eine Korrektur der Zählerstände erfolgt nur, wenn das Auswertungsergebnis der Synchron- und Zusatzinformation mit hoher Wahrscheinlichkeit richtig ist. Durch die Zahlenwerte A0, A1 und A2 ist die Position innerhalb des Aufzeichnungsmusters der genannten matrixartigen Aufzeichnung in Blöcken bitgenau festgelegt.

Durch die Bitzahl des Datenwortes A1 ist hier die Anzahl der Datenblöcke je Spur auf 64 beschränkt. Das ist bei den relativ kurzen Spuren der matrixartigen Aufzeichnung ausreichend, zumal bei kurzen Datenblöcken der Anteil der für die Synchron- und Zusatzinformation erforderlichen Übertragungskapazität entsprechend hoch ist. Das Datenwort A2 reicht aus, um 256 Spurpaare bzw. 512 Spuren abzuzählen. Da benachbarte Spuren mit entgegengesetzten Azimutwinkeln aufgezeichnet sind, führt das Zählen von Spurpaaren zu einer eindeutigen Spurkennzeichnung.

Das die Zusatzinformation enthaltende Synchronsignal gemäß Fig. 2 erlaubt es, gleichzeitig mit dem Erkennen des Synchronmusters S die Zusatzinformation A1, A2 verfügbar zu machen. Sofern das Synchronmuster erkannt wird, ist die Zusatzinformation mit hoher Wahrscheinlichkeit fehlerfrei.

## Patentansprüche

1. Verfahren zur Übertragung eines Digitalsignals, das eine Synchronisation mit einem Synchronwort und eine Zusatzinformation enthält, insbesondere für eine Aufzeichnung, **dadurch gekennzeichnet,** daß das Synchronwort gleichzeitig die Zusatzinformation enthält, wobei Signalteile mit jeweils mindestens zwei aufeinanderfolgenden binären Signalzuständen sowohl ein Bit (00,LL/L0,01) des Synchronwortes entsprechend einer ersten Modulation als auch ein Bit (0L,L0) der Zusatzinformation entsprechend einer zweiten Modulation darstellen, daß das Synchronmuster (S) erst nach einer Demodulation des Synchronwortes erkennbar ist und daß eine zweite Demodulation des Synchronwortes die Zusatzinformation liefert, wobei der Stellenwert der durch die zweite Demodulation gewonnenen Bits durch ein aus der Synchroninformation gewonnenes Taktsignal (L) bestimmt wird.

2. Verfahren nach Anspruch 1, **dadurch gekennzeichnet,** daß das Synchronmuster (S) durch Demodulation des Synchronwortes mit Hilfe eines Biphase-Mark- oder Biphase-Space-Demodulators und die Zusatzinformation mit Hilfe eines Biphase-Level-Demodulators gewonnen wird.

## Claims

1. A method of transmitting a digital signal containing a synchronisation with a synchronous word and a piece of additional information, particularly for a recording, characterised in that the synchronous word also contains the additional information, parts of the signal, in each case with at least two successive binary signal states, representing both one bit (00,LL/L0,01) of the synchronous word corresponding to a first modulation and one bit (0L,L0) of the additional information corresponding to a second modulation, that the synchronous pattern (S) can be recognised only after demodulation of the synchronous word, and that a second demodulation of the synchronous word provides the additional information, the place value of the bits obtained by the second demodulation being determined by a clock signal (L) obtained from the synchronous information.

2. A method according to claim 1, characterised in that the synchronous pattern (S) is obtained through demodulation of the synchronous word by means of a biphase mark or biphase space demodulator, and the additional information is obtained by means of a biphase level demodulator.

## Revendications

1. Procédé pour la transmission d'un signal numérique qui contient une synchronisation avec un mot de synchronisation et une information supplémentaire, en particulier pour un enregistrement, **caractérisé en ce** que le mot de synchronisation contient simultanément l'information supplémentaire, des parties de signal avec respectivement au moins deux états de signaux binaires successifs présentant aussi bien un bit (00, LL/L0, 01) du mot de synchronisation conformément à une première modulation qu'un bit (0L, L0) de l'information supplémentaire conformément à une seconde modulation, que le profil de synchronisation (S) ne peut être reconnu qu'après une démodulation du mot de synchronisation et qu'une seconde démodulation du mot de synchronisation fournit l'information supplémentaire, le poids des bits obtenus par la seconde démodulation étant déterminé par un signal de synchronisation (L) obtenu à partir de l'information de synchronisation.

2. Procédé selon la revendication 1, **caractérisé en ce** que le profil de synchronisation (S) est obtenu par démodulation du mot de synchronisation à l'aide d'un démodulateur biphase mark ou space et que l'information supplémentaire est obtenue à l'aide d'un démodulateur biphase level.
